# EUROPEAN PATENT APPLICATION

(11) **EP 4 159 789 A1**
(43) Date of publication of application: **05.04.2023**
(21) Application number: 21812851.0
(22) Date of filing: 20.05.2021
(51) Int. Cl.: C08G 69/26, C08K 5/00, C08K 7/00, C08L 77/00, C08L 101/00, B29C 65/16

(54) **PERMEABLE RESIN COMPOSITION FOR LASER WELDING, KIT, MOLDED ARTICLE, AND METHOD FOR PRODUCING MOLDED ARTICLE**

(30) Priority: 25.05.2020 JP 2020090936
(71) Applicant: Mitsubishi Engineering-Plastics Corporation, Tokyo 105-0021 (JP)
(72) Inventor: OKAMOTO Fumihito, Hiratsuka-shi, Kanagawa 254-0016 (JP)
(74) Representative: Zimmermann & Partner Patentanwälte mbB
(86) International application number: PCT/JP2021/019112
(87) International publication number: WO 2021/241380

(57) **Abstract**

To provide a transmissive resin composition for laser welding that excels in physical properties including mechanical strength and low warpage, and has large light transmittance; a kit; a formed article; and a method for manufacturing the formed article. The transmissive resin composition for laser welding contains, per 100 parts by mass of a crystalline thermoplastic resin, 10 to 120 parts by mass of a glass flake having a thickness of 0.1 to 2 µm, and a light-transmissive coloring matter.

## Description

### TECHNICAL FIELD

This invention relates to a transmissive resin composition for laser welding, a kit, a formed article, and a method for manufacturing the formed article.

### BACKGROUND ART

Thermoplastic resin is easy to process, and has widely been applied to vehicle component, electrical/electronic equipment parts, other precision equipment parts and so forth, making full use of its excellent properties. Also morphologically intricate parts have increasingly been manufactured by using the thermoplastic resin, particularly crystalline thermoplastic resin, so that parts having a hollow section, such as intake manifold, have been bonded with the aid of a variety of welding technologies including adhesive welding, vibration welding, ultrasonic welding, hot plate welding, injection welding and laser welding.

Adhesive welding has, however, suffered from loss of time due to the curing time, and environmental impact such as peripheral pollution. Ultrasonic welding and hot plate welding have been reported to damage the product due to vibration and heat, and to require post-process for removing abrasion powder or produced burr. Injection welding has often required to use specialized dies and molding machines, and has been feasible only with use of highly fluidic material.

On the other hand, laser welding is a method of bonding, by which a laser light transmitting (also referred to as non-absorptive or poorly-absorptive) resin member (occasionally referred to as "transmissive resin member", hereinafter), and a laser light-absorptive resin member (occasionally referred to as "absorptive resin member", hereinafter) are brought into contact and welded, thereby bonding both resin members. More specifically, laser light is irradiated through the transmissive resin member on the joint face, so as to melt, and then bond, the absorptive resin member that forms the joint face with the light energy. Since laser welding produces neither abrasion powder nor burr, causes less damage on the product, and since polyamide resin *per se* has a relatively high laser transmittance, so that recent attention has been focused on process of the polyamide resin products with the aid of laser welding technology.

The transmissive resin member is usually obtained by forming a light-transmitting resin composition. Patent Literature 1 describes this sort of light-transmitting resin composition, which is a resin for laser welding, having blended therein (A) 100 parts by weight of polyamide resin, and (B) 1 to 150 parts by weight of reinforcing filler having a refractive index at 23°C of 1.560 to 1.600, wherein at least one monomer that composes at least one kind of the (A) polyamide resin has an aromatic ring. Patent Literature 1 discloses, in EXAMPLES, resin compositions in which a blend of polyamide MXD6 and polyamide 66, or, a blend of polyamide 61/6T and polyamide 6 is further blended with glass fiber and coloring matter.

### CITATION LIST

### PATENT LITERATURE

[Patent Literature 1] JP 2008-308526 A

### SUMMARY OF THE INVENTION

### TECHNICAL PROBLEM

Now, with advancement of the laser welding technology, some other novel material has been awaited. In particular, a material that excels in physical properties including mechanical strength and low warpage, as well as large light transmittance, has been sought.

This invention, aimed at solving the issues, is to provide a transmissive resin composition for laser welding that excels in physical properties including mechanical strength and low warpage, and has large light transmittance; a kit; a formed article; and a method for manufacturing the formed article.

### SOLUTION TO PROBLEM

The present inventors conducted research to address the above-mentioned problems, and as a result, discovered that the above problems could be solved by using a glass flake having a thickness of 0.1 to 2 µm as a reinforcing filler. Specifically, the problems described above are solved by the following means.
<1> A transmissive resin composition for laser welding containing, per 100 parts by mass of a crystalline thermoplastic resin, 10 to 120 parts by mass of a glass flake having a thickness of 0.1 to 2 µm, and a light-transmissive coloring matter.
<2> The resin composition of <1>, wherein the light-transmissive coloring matter has a perylene skeleton.
<3> The resin composition of <1> or <2>, wherein the crystalline thermoplastic resin contains a polyamide resin.
<4> The resin composition of <3>, wherein the polyamide resin contains a polyamide resin that includes a diamine-derived structural unit and a dicarboxylic acid-derived structural unit, in which 70 mol% or more of the diamine-derived structural unit is derived from xylylenediamine, 70 mol% or more of the dicarboxylic acid-derived structural unit is derived from straight-chain aliphatic α,ω-dicarboxylic acid having 4 to 20 carbon atoms, and 30 mol% or more of the xylylenediamine-derived structural unit is a metaxylylenediamine-derived structural unit.
<5> The resin composition of any one of <1> to <4>, demonstrating a warpage of 1 mm or smaller when the resin composition is given in the form of a 60 mm × 60 mm × 1 mm thick formed article, the warpage being a difference of height between the highest point and the lowest point of the formed article placed on a reference stage.
<6> The resin composition of any one of <1> to <5>, wherein the crystalline thermoplastic resin contains a polyamide resin that demonstrates a heat of crystallization, measured with use of a differential scanning calorimeter, of 0 to -1 mJ/mg.
<7> A kit comprising the resin composition described in any one of <1> to <6>, and a light-absorptive resin composition that contains a thermoplastic resin and a light-absorptive coloring matter.
<8> A formed article formed of the resin composition described in any one of <1> to <6>, or formed with use of the kit described in <7>.
<9> A method for manufacturing a formed article, the method comprising laser-welding a formed article formed of the resin composition described in any one of <1> to <6>, with a formed article formed of a light-absorptive resin composition that contains a thermoplastic resin and a light-absorptive coloring matter.

### ADVANTAGEOUS EFFECTS OF INVENTION

This invention is the first to provide a transmissive resin composition for laser welding that excels in physical properties including mechanical strength and low warpage, and, has large light transmittance; a kit; a formed article; and a method for manufacturing the formed article.

### BRIEF DESCRIPTION OF DRAWING

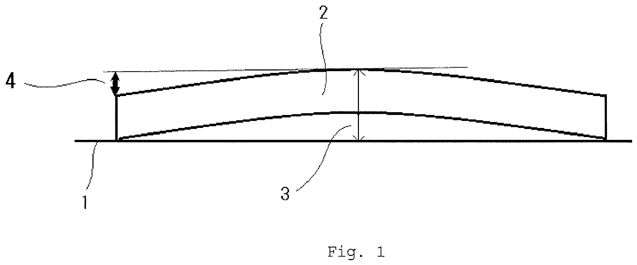

[Fig. 1] A schematic drawing illustrating a method for measuring the height of warpage in Examples.

### DESCRIPTION OF EMBODIMENTS

Embodiments for carrying out the invention (simply referred to as "this embodiment", hereinafter) will be detailed below. The embodiments below are merely illustrative, so that this invention is not limited solely to these embodiments.

Note that all numerical ranges given in this patent specification, with "to" preceded and succeeded by numerals, are used to represent the ranges including these numerals respectively as the lower and upper limit values.

Various physical properties and characteristic values mentioned herein are those demonstrated at 23°C, unless otherwise specifically noted.

The transmissive resin composition for laser welding of this embodiment (may simply referred to as "the resin composition of this embodiment", hereinafter) specifically contains, per 100 parts by mass of a crystalline thermoplastic resin, 10 to 120 parts by mass of a glass flake having a thickness of 0.1 to 2 µm, and a light-transmissive coloring matter. With such structure, the invention becomes possible to provide a transmissive resin composition for laser welding that excels in physical properties including mechanical strength and low warpage, and, has large light transmittance. Blending of an inorganic filler typically aimed at achieving high mechanical strength and low warpage has been a known practice. However, it has not yet been known at all that shape of the inorganic filler can affect light transmittance. In this invention, it was surprisingly found out that use of a glass flake having a thickness of 0.1 to 2 µm, as the inorganic filler, can improve not only the mechanical strength and low warpage, but also light transmittance.

### <Crystalline Thermoplastic Resin>

The resin composition of this embodiment contains a crystalline thermoplastic resin. The crystalline thermoplastic resin is exemplified by polyamide resin, polyacetal resin, and polyester resin (preferably, polybutylene terephthalate resin), among which preferred are polyamide resin and polybutylene terephthalate resin, and further preferred is polyamide resin. With use of the crystalline polyamide resin, the resin composition may be more rapidly cured, when forming a formed article. Also with use of the crystalline polyamide resin, the obtainable resin composition will tend to excel in oil resistance, grease resistance, lubricity, slidability, wear resistance, and friction resistance.

The crystalline thermoplastic resin is defined by a resin that will have a "crystalline domain" in which the molecules are aligned orderly, when temperature of the resin is lowered down to the crystallization temperature to cause solidification.

In the resin composition of this embodiment, the crystalline thermoplastic resin preferably accounts for 30% by mass or more, more preferably 40% by mass or more, and even more preferably 45% by mass or more. Meanwhile, the upper limit value of the content of the crystalline thermoplastic resin in the resin composition is preferably 90% by mass or below, more preferably 80% by mass or below, and even more preferably 75% by mass or below.

The resin composition of this embodiment may contain only one kind of, or two or more kinds of the crystalline thermoplastic resin. When two or more kinds are contained, the total content preferably falls within the aforementioned ranges.

### <<Polyamide Resin>>

The polyamide resin used in this embodiment may be any of known polyamide resins without special limitation. The polyamide resin may be understood typically by referring to the description in paragraphs [0011] to [0013] of JP 2011-132550 A.

The polyamide resin used in this embodiment may be aliphatic polyamide resin or semi-aromatic polyamide resin, wherein the semi-aromatic polyamide resin is preferred.

The aliphatic polyamide resin is exemplified by polyamide 6, polyamide 11, polyamide 12, polyamide 46, polyamide 66, polyamide 610, polyamide 612, polyamide 1010, and polyamide 1012.

On the other hand, the semi-aromatic polyamide resin may be exemplified by those formed of a diamine-derived structural unit and a dicarboxylic acid-derived structural unit, wherein aromatic ring-containing structural units account for 30 to 70 mol% of the total of the diamine-derived structural unit and the dicarboxylic acid-derived structural unit. The aromatic ring-containing structural units preferably account for 40 to 60 mol% of the total of the diamine-derived structural unit and the dicarboxylic acid-derived structural unit. With use of such semi-aromatic polyamide resin, the obtainable formed article will have enhanced mechanical strength. The semi-aromatic polyamide resin is exemplified by terephthalate-based polyamide resin (polyamide 6T, polyamide 9T), and xylylenediamine-based polyamide resin described later.

At least one kind of the polyamide resin used in this embodiment is preferably formed of a diamine-derived structural unit and a dicarboxylic acid-derived structural unit, in which 70 mol% or more of the diamine-derived structural unit is derived from xylylenediamine (preferably, 30 mol% or more of the xylylenediamine-derived structural unit represents metaxylylenediamine-derived structural unit), and 70 mol% or more of the dicarboxylic acid-derived structural unit is derived from the straight-chain aliphatic α,ω-dicarboxylic acid having 4 to 20 carbon atoms (may occasionally referred to as "xylylenediamine-based polyamide resin", hereinafter).

In the xylylenediamine-based polyamide resin, more preferably 75 mol% or more, even more preferably 80 mol% or more, yet more preferably 90 mol% or more, and furthermore preferably 95 mol% or more of the diamine-derived structural unit is derived from xylylenediamine. In the xylylenediamine-based polyamide resin, more preferably 75 mol% or more, even more preferably 80 mol% or more, yet more preferably 90 mol% or more, and furthermore preferably 95 mol% or more of the dicarboxylic acid-derived structural unit is derived from a straight-chain aliphatic α,ω-dicarboxylic acid having 4 to 20 carbon atoms.

Xylylenediamine is preferably paraxylylenediamine and/or metaxylylenediamine, more preferably contains at least metaxylylenediamine, and more preferably contains metaxylylenediamine whose content is 30 mol% or more (preferably 40 mol% or more, more preferably 50 mol% or more, and even more preferably 60 mol% or more) of xylylenediamine. Xylylenediamine more preferably contains 30 to 90 mol% (preferably 60 to 90 mol%) of metaxylylenediamine, and 70 to 10 mol% (preferably 40 to 10 mol%) of paraxylylenediamine. The total of metaxylylenediamine and paraxylylenediamine is 100 mol% or less of the raw diamine, and is preferably 90 to 100 mol%.

Diamine other than metaxylylenediamine and paraxylylenediamine, but employable as the raw diamine component of the xylylenediamine-based polyamide resin, is exemplified by aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and aromatic ring-containing diamines such as bis(4-aminophenyl) ether, paraphenylenediamine, and bis(aminomethyl)naphthalene, all of which may be used singly, or in combination of two or more kinds.

The straight-chain aliphatic α,ω-dicarboxylic acid having 4 to 20 carbon atoms suitably used as the raw dicarboxylic acid component of the xylylenediamine-based polyamide resin is exemplified by aliphatic dicarboxylic acids such as succinic acid, glutaric acid, pimelic acid, suberic acid, azelaic acid, adipic acid, sebacic acid, undecanedioic acid, and dodecanedioic acid, all of which may be used singly, or in combination of two or more kinds. Among them, more preferred is adipic acid or sebacic acid, from the viewpoint that the polyamide resin will have melting point suitable for forming or molding.

Dicarboxylic acid component other than the straight-chain aliphatic α,ω-dicarboxylic acid having 4 to 20 carbon atoms is exemplified by phthalic acid compounds such as isophthalic acid, terephthalic acid, and orthophthalic acid; and isomers of naphthalene dicarboxylic acid such as 1,2-naphthalene dicarboxylic acid, 1,3-naphthalene dicarboxylic acid, 1,4-naphthalene dicarboxylic acid, 1,5-naphthalene dicarboxylic acid, 1,6-naphthalene dicarboxylic acid, 1,7-naphthalene dicarboxylic acid, 1,8-naphthalene dicarboxylic acid, 2,3-naphthalene dicarboxylic acid, 2,6-naphthalene dicarboxylic acid, and 2,7-naphthalene dicarboxylic acid, all of which may be used singly, or in combination of two or more kinds thereof.

Note that the polyamide resin, although having the diamine-derived structural unit and the dicarboxylic acid-derived structural unit as the major components, does not completely exclude any structural unit other than them, and may of course contain any structural unit derived from lactams such as ε-caprolactam or laurolactam; or from aminocarboxylic acids such as aminocaproic acid, and aminoundecanoic acid. Now, the diamine-derived structural unit and the dicarboxylic acid-derived structural unit may be referred to as the major components, if the total number thereof accounts for the largest percentage of the all structural units that compose the xylylenediamine-based polyamide resin. In this embodiment, the total of the diamine-derived structural unit and the dicarboxylic acid-derived structural unit preferably accounts for 90% or more of all structural units in the xylylenediamine-based polyamide resin, and more preferably accounts for 95% or more.

The crystalline thermoplastic resin used in this embodiment preferably contains a polyamide resin that demonstrates a heat of crystallization, measured with use of a differential scanning calorimeter, of 0 to -1 mJ/mg, which is more preferably 0 to -0.8 mJ/mg. With use of such polyamide resin, crystallization will proceed effectively, making it less likely to cause considerable degradation of mechanical strength even under water absorption over time. The heat of crystallization in this context means a value measured under conditions described later in EXAMPLES.

One embodiment of the resin composition of this embodiment is exemplified by a case that is substantially free of thermoplastic resin other than the polyamide resin. "Substantially free of ..." means that the content of the thermoplastic resin other than the polyamide resin is 5% by mass or less of the resin composition of this embodiment, which is more preferably 3% by mass or less, and even more preferably 1% by mass or less.

Meanwhile, the polyacetal resin used in this embodiment may be understood referring to the description in paragraphs [0009] to [0012] of JP 2019-123836 A, the content of which is incorporated herein by reference. The polybutylene terephthalate resin used in this embodiment may be understood referring to the description in paragraphs [0016] to [0024] of JP 2020-019950 A, the content of which is incorporated herein by reference.

### <Glass Flake>

The resin composition of this embodiment contains, per 100 parts by mass of the crystalline thermoplastic resin, 10 to 120 parts by mass of a glass flake having a thickness of 0.1 to 2 µm. With such structure, not only the mechanical strength and low warpage, but also the light transmittance may be improved.

In this embodiment, the thickness of the glass flake is defined by average thickness. The thickness of the glass flake is preferably 0.3 um or larger, more preferably 0.4 µm or larger, even more preferably 0.5 µm or larger, and yet more preferably 0.6 µm or larger. Meanwhile, the thickness of the glass flake is preferably 1.8 µm or smaller, more preferably 1.6 µm or smaller, even more preferably 1.4 um or smaller, yet more preferably 1.2 µm or smaller, furthermore preferably 1.0 µm or smaller, and again furthermore preferably 0.8 um or smaller. The average thickness may be measured according to the method below.

### <<Method for Measuring Average Thickness>>

One hundred or more glass flakes are observed under a scanning electron microscope (SEM) to individually measure the thickness, and the measured values are averaged. Cross section of the glass flake (thickness-wise end face) is aligned normal to the axis of irradiation of electron beam of the scanning electron microscope, by manipulating a sample stage with a sample stage fine adjustor.

In this embodiment, the glass flake preferably has a number-average aspect ratio of 3 to 20. Also the aspect ratio may be measured in the same way as the aforementioned method for measuring the average thickness.

The glass flake may have various types of glass composition represented by A-glass, C-glass, D-glass, R-glass glass, S-glass and E-glass, without special limitation.

The resin composition of this embodiment contains, per 100 parts by mass of the crystalline thermoplastic resin, 10 to 120 parts by mass of the glass flake having a thickness of 0.1 to 2 µm. The content of the glass flake, per 100 parts by mass of the crystalline thermoplastic resin, preferably 20 parts by mass or more, more preferably 30 parts by mass or more, even more preferably 35 parts by mass or more, yet more preferably 40 parts by mass or more, furthermore preferably 45 parts by mass or more, and may even be 60 parts by mass or more, 80 parts by mass or more, or 90 parts by mass or more. Meanwhile, the content of the glass flake having a thickness of 0.1 to 2 µm, per 100 parts by mass of the crystalline thermoplastic resin, is preferably 120 parts by mass or less, more preferably 115 parts by mass or less, even more preferably 110 parts by mass or less, and may even be 105 parts by mass or less.

The glass flake having a thickness of 0.1 to 2 µm preferably accounts for 10 to 60% by mass of the resin composition of this embodiment, which is more preferably 20 to 60% by mass, and may even be 25 to 55% by mass.

The resin composition of this embodiment may contain only one kind of, or two or more kinds of the glass flake having a thickness of 0.1 to 2 µm. When two or more kinds are contained, the total content preferably falls within the aforementioned ranges.

The resin composition of this embodiment may contain some other inorganic filler other than the glass flake having a thickness of 0.1 to 2 µm, but not necessarily.

Such other inorganic filler is exemplified by those having a shape of fiber, scale, sphere, or needle, and the component is exemplified by glass, metal oxide, metal hydroxide, carbonate, and sulfate.

One embodiment of the resin composition of this embodiment relates to a resin composition substantially free of inorganic filler other than the glass flake having a thickness of 0.1 to 2 µm. "Substantially free of ..." herein means that the content of the inorganic filler, other than the glass flake having a thickness of 0.1 to 2 µm, is 5% by mass or less of the total content of the inorganic fillers contained in the resin composition, which is preferably 3% by mass or less, and more preferably 1% by mass or less.

Note that the inorganic filler in this embodiment exclude any of those that apply to a nucleating agent.

### <Light-Transmissive Coloring Matter>

The resin composition of this embodiment contains a light-transmissive coloring matter. With the light-transmissive coloring matter contained therein, the obtainable formed article will have hue, thus improving the outer appearance of the formed article. In particular, the hue of the transmissive resin member formed of the resin composition of this embodiment, and the hue of the absorptive resin member detailed later can be matched, thus improving the outer appearance of the obtainable formed article (laser welded article).

The light-transmissive coloring matter used in this embodiment is usually a black coloring matter, which is specifically exemplified by coloring matters having skeletons selected from nigrosine skeleton, naphthalocyanine skeleton, aniline black skeleton, phthalocyanine skeleton, porphyrin skeleton, perinone skeleton, quaterrylene skeleton, azo skeleton, anthraquinone skeleton, pyrazolone skeleton, squaric acid derivative skeleton, perylene skeleton, chromium complex, and immonium skeleton, among them a coloring matter having a perylene skeleton is preferred.

The light-transmissive coloring matter is typically defined by a coloring matter that makes the resin composition demonstrate a transmittance of 2% or larger, when the polyamide resin, 30% by mass of the glass flake, and 0.2% by mass of such coloring matter (a coloring matter presumed to be a light-transmissive coloring matter) are mixed up to 100% by mass in total, and then subjected to measurement of light transmittance at 1060 nm wavelength according to the measurement method described later.

The light-transmissive coloring matter may be either dye or pigment, wherein pigment is preferred.

Commercially available products are exemplified by e-BIND LTW-8731H and e-BIND LTW-8701H, which are colorants (coloring matter) from Orient Chemical Industries Co., Ltd.; Plast Yellow 8000, Plast Red M 8315, and Oil Green 5602, which are colorants from Arimoto Chemical Co., Ltd.; Macrolex Yellow 3G, Macrolex Red EG, and Macrolex Green 3, which are colorants from LANXESS GmbH; and Spectrasence K0087 (former Lumogen (registered trademark) Black K0087, Lumogen Black FK4280), and Spectrasence K0088 (former Lumogen Black K0088, Lumogen Black FK4281), which are colorants from BASF SE.

The content of the light-transmissive coloring matter in the resin composition of this embodiment, per 100 parts by mass of the resin composition, is preferably 0.001 parts by mass or more, more preferably 0.01 parts by mass or more, even more preferably 0.08 parts by mass or more, and may even be 0.1 parts by mass or more, 0.15 parts by mass or more, and 0.2 parts by mass or more. Meanwhile, the upper limit value of the content of the light-transmissive coloring matter, per 100 parts by mass of the resin composition, is preferably 5.0 parts by mass or below, more preferably 3.0 parts by mass or below, even more preferably 1.0 part by mass or below, and may even be 0.8 parts by mass or below, 0.5 parts by mass or below, 0.4 parts by mass or below, and 0.3 parts by mass or below.

The resin composition may contain only one kind of, or two or more kinds of the light-transmissive coloring matter. When two or more kinds are contained, the total content preferably falls within the aforementioned ranges.

The transmissive resin composition for laser welding of this embodiment preferably contains substantially no carbon black. "Contains substantially no ..." typically means that the content is 0.0001% by mass or less of the resin composition.

### <Nucleating Agent>

The resin composition of this embodiment may contain a nucleating agent.

The nucleating agent is not specifically limited, as far as it remains unmelt during melt working, and can act as a crystal nucleus in the cooling process. In particular, talc and calcium carbonate are preferred, and talc is more preferred.

The nucleating agent has the number-average particle size whose lower limit is preferably 0.1 µm or above, more preferably 1 µm or above, and even more preferably 3 um or larger or above. The nucleating agent has the number-average particle size whose upper limit is preferably 40 µm or below, more preferably 30 µm or below, even more preferably 28 µm or below, yet more preferably 15 um or below, and furthermore preferably 10 µm or below.

Ratio of the nucleating agent in the resin composition of this embodiment is preferably 0.01 to 1% by mass, more preferably 0.1% by mass or larger, and more preferably 0.5% by mass or smaller.

The resin composition of this embodiment may contain only one kind, or two or more kinds of the nucleating agent. When two or more kinds are contained, the total content preferably falls within the aforementioned ranges.

### <Copper Compound>

The resin composition of this embodiment may contain a copper compound. With use of the copper compound, distinctively high heat aging resistance will be achieved.

The copper compound used in this embodiment is exemplified by copper halides (for example, copper iodide, copper bromide, and copper chloride) and copper acetates, which is preferably selected from copper(I) iodide, copper(II) iodide, copper(I) bromide, copper(II) bromide, copper(I) acetate, copper(II) acetate, copper(I) chloride, and copper(II) chloride; and more preferably selected from copper(I) iodide, copper(I) acetate, and copper(I) chloride.

The copper compound is preferably used in combination with an alkali metal halide described later. Combination of the copper compound with the alkali metal halide preferably relates to a 1:1 to 1:15 (mass ratio) mixture of the copper compound and alkali metal halide, more preferably relates to a 1:1 to 1:5 mixture, and even more preferably a 1:2 to 1:4 mixture.

Combination of the copper compound with the alkali metal halide may be understood referring to the description in paragraphs [0046] to [0048] of JP 2013-513681 A, the content of which is incorporated herein by reference.

Ratio of the copper compound in the resin composition of this embodiment is preferably 0.01 to 1% by mass, more preferably 0.03% by mass or larger, even more preferably 0.05% by mass or larger, meanwhile preferably 0.5% by mass or smaller.

The resin composition of this embodiment may contain only one kind of, or two or more kinds of the copper compound. When two or more kinds are contained, the total content preferably falls within the aforementioned ranges.

### <Alkali Metal Halide>

The alkali metal halide used in this embodiment is defined by a halide of alkali metal. The alkali metal is preferably potassium and sodium, and more preferably potassium. The halogen atom is preferably iodine, bromine, and chlorine, and more preferably iodine. The alkali metal halide used in this embodiment is specifically exemplified by potassium iodide, potassium bromide, potassium chloride, and sodium chloride, among them preferred is potassium iodide.

Ratio of the alkali metal halide in the resin composition of this embodiment is preferably 0.01 to 1% by mass, and more preferably 0.1% by mass or larger, meanwhile preferably 0.5% by mass or smaller.

The resin composition of this embodiment may contain only one kind of, or two or more kinds of the alkali metal halide. When two or more kinds are contained, the total content preferably falls within the aforementioned ranges.

### <Mold Releasing Agent>

The resin composition of this embodiment preferably contains a mold releasing agent. With the mold releasing agent contained therein, mold releasability from dies, typically used in molding such as injection molding, may be improved.

The mold releasing agent preferably contains at least one of amido-based wax or metal salt of fatty acid, wherein the metal salt of fatty acid is more preferred.

The amide-based wax is exemplified by carboxylic amide-based wax and bisamide-based wax, wherein carboxylic amide-based wax is preferred.

The carboxylic amide-based wax is typically obtainable by dehydration reaction of a mixture of a higher aliphatic monocarboxylic acid and a polybasic acid, with a diamine compound. The higher aliphatic monocarboxylic acid is preferably saturated aliphatic monocarboxylic acid and hydroxycaboxylic acid, having 16 or more carbon atoms, which is exemplified by palmitic acid, stearic acid, behenic acid, montanic acid, and 12-hydroxystearic acid. The polybasic acid is a carboxylic acid having a dibasicity or higher basicity, which is exemplified by aliphatic dicarboxylic acids such as malonic acid, succinic acid, adipic acid, sebacic acid, pimelic acid, and azelaic acid; aromatic dicarboxylic acids such as phthalic acid and terephthalic acid; and alicyclic dicarboxylic acids such as cyclohexanedicarboxylic acid, and cyclohexylsuccinic acid.

The diamine compound is exemplified by ethylenediamine, 1,3-diaminopropane, 1,4-diaminobutane, hexamethylenediamine, metaxylylenediamine, tolylenediamine, paraxylylenediamine, phenylenediamine, and isophorone diamine.

The carboxylic amide-based wax in this embodiment may have the softening point which is freely variable by changing ratio of mixing of the polybasic acid, relative to the higher aliphatic monocarboxylic acid used for the production. The ratio of mixing of the polybasic acid suitably falls in the range from 0.18 to 1 mol, per 2 mol of the higher aliphatic monocarboxylic acid. The amount of consumption of the diamine compound suitably falls in the range from 1.5 to 2 mol, per 2 mol of the higher aliphatic monocarboxylic acid, which can vary depending on the amount of the polybasic acid to be used.

The bisamide-based wax is typically exemplified by a compound formed between a diamine compound and a fatty acid, such as N,N'-methylenebis(stearylamide) and N,N'-ethylenebis(stearylamide); or dioctadecyl dibasic acid amide such as N,N'-dioctadecyl terephthalamide.

The metal salt of fatty acid is preferably metal salt of long-chain fatty acid having 16 to 36 carbon atoms, which is exemplified by metal salt of stearic acid such as calcium stearate, zinc stearate, aluminum stearate, sodium stearate, and lithium stearate; and metal salt of montanic acid such as calcium montanate, and sodium montanate, among them preferred is the metal salt of montanic acid.

Besides the substances described above, the mold releasing agent is also exemplified by ester formed between aliphatic carboxylic acid and alcohol; aliphatic hydrocarbon compound having a number-average molecular weight of 200 to 15,000; polysiloxane-based silicone oil; and ketone wax.

Details of the mold releasing agent may be understood referring to the descriptions in paragraphs [0055] to [0061] of JP 2018-095706 A, and in paragraphs [0022] to [0027] of JP 2019-108526 A, the contents of which are incorporated herein by reference.

The content of the mold releasing agent in the resin composition of this embodiment is preferably 0.05% by mass or more of the resin composition, more preferably 0.1% by mass or more, and even more preferably 0.2% by mass or more. At or above the lower limit value, the mold releasability will tend to further improve. Meanwhile, the content of the mold releasing agent is preferably 3% by mass or less, more preferably 2% by mass or less, even more preferably 1% by mass or less, yet more preferably 0.8% by mass or less, and furthermore preferably 0.6% by mass or less.

The resin composition of this embodiment may contain only one kind of, or two or more kinds of the mold releasing agent. When two or more kinds are contained, the total content preferably falls within the aforementioned ranges.

### <Other Components>

The resin composition of this embodiment may contain other components, without departing from the spirit of this embodiment. Such additive is exemplified by filler other than the glass flake having a thickness of 0.1 to 2 µm, light stabilizer, antioxidant, UV absorber, fluorescent brightener, anti-dripping agent, antistatic agent, anti-clouding agent, anti-blocking agent, flow modifier, plasticizer, dispersion aid, antiviral agent, antibacterial agent, and flame retardant. These components may be used singly, or in combination of two or more kinds. The flame retardant is preferably phosphorus-containing flame retardant. The phosphorus-containing flame retardant is exemplified by phosphazene-based flame retardant, phosphinate-based flame retardant, and diphosphinate-based flame retardant.

The resin composition of this embodiment contains the crystalline thermoplastic resin (preferably polyamide resin), the glass flake having a thickness of 0.1 to 2 µm, and the light-transmissive coloring matter, and further the nucleating agent, the copper compound, the alkali metal halide, the mold releasing agent, and other additives, while adjusting the total contents of the individual components to 100% by mass. This embodiment exemplifies a case where the crystalline thermoplastic resin, the glass flake having a thickness of 0.1 to 2 µm, and, optional components including the nucleating agent, the copper compound, the alkali metal halide, and the mold releasing agent will add up to 99% by mass or more of the resin composition.

### <Physical Properties of Resin Composition>

The resin composition of this embodiment preferably demonstrates small warpage, when given as a formed article. More specifically, the resin composition of this embodiment preferably demonstrates a warpage of 2 mm or smaller when given in the form of a 60 mm × 60 mm × 1 mm thick formed article, which is more preferably 1 mm or smaller, and even more preferably 0.9 mm or smaller. The warpage is defined by a difference of height between the highest point and the lowest point of the formed article placed on a reference stage. Details will follow the description in EXAMPLES later. The lower limit value of the warpage, although ideally 0 mm, is practically 0.05 mm or above.

The resin composition of this embodiment preferably has large flexural strength, when formed into a 4 mm thick ISO tensile test specimen, and measured in compliance with ISO 178. More specifically, the flexural strength is preferably 200 MPa or larger. The upper limit value, although the higher the better, is practically 500 MPa or below, for example.

The resin composition of this embodiment preferably demonstrates large flexural modulus, when formed into a 4 mm thick ISO tensile test specimen and measured in compliance with ISO 178. More specifically, the flexural modulus is preferably 9000 MPa or larger. The upper limit value, although the higher the better, is practically 20000 MPa or below, for example.

### <Method for Producing Resin Composition>

A method for producing the resin composition of this embodiment, although not specifically limited, preferably uses a single-screw or twin-screw extruder as a kneader, devised to enable degassing through a vent port. The crystalline thermoplastic resin component, the glass flake having a thickness of 0.1 to 2 µm, the light-transmissive coloring matter, and other optional additives may be fed to the kneader *en bloc*; or other components to be blended may be sequentially fed to the crystalline thermoplastic resin. The inorganic filler such as the glass flake having a thickness of 0.1 to 2 µm is preferably fed at the middle of the kneader, in order to avoid fracture during kneading. Alternatively, two or more kinds of component selected from the individual components may be pre-mixed or kneaded.

In this embodiment, the light-transmissive coloring matter may be preliminarily mixed with a thermoplastic resin such as polyamide 6 or polyamide 66 to prepare a masterbatch, and then further kneaded with other components (thermoplastic resin, etc.) to prepare the resin composition of this embodiment.

### <Method for Manufacturing Formed Article>

The method for manufacturing a formed article with use of the resin composition of this embodiment is not specifically limited, to which any of known forming methods having been applied to thermoplastic resin are applicable, from among injection molding, hollow molding, extrusion molding, press forming and so forth. The resin composition of this embodiment is particularly suitable for a forming method with use of a die, and for a forming method that employs cooling with the die.

A kit of this embodiment contains the resin composition of this embodiment, and a light-absorptive resin composition that contains a thermoplastic resin and a light-absorptive coloring matter. The kit of this embodiment is preferably used for manufacturing a formed article by laser welding.

That is, the resin composition contained in the kit plays a role of the light-transmitting resin composition, and a formed article formed of the light-transmitting resin composition serves as a transmissive resin member through which the laser light in laser welding can transmit. On the other hand, a formed article formed of the light-absorptive resin composition serves as an absorptive resin member that absorbs the laser light in laser welding.

### <<Light-absorptive Resin Composition>>

The light-absorptive resin composition this embodiment contains the thermoplastic resin (preferably crystalline thermoplastic resin) and the light-absorptive coloring matter.

The thermoplastic resin is exemplified by polyamide resin, olefinic resin, vinyl-based resin, styrene-based resins, acrylic resin, polyphenylene ether-based resin, polyester resin, polycarbonate resin, and polyacetal resin. Among them, particularly preferred are polyamide resin, polyacetal resin, and polyester resin (preferably, polybutylene terephthalate resin) for their good compatibility with the resin composition, and further preferred is polyamide resin. The thermoplastic resin may be of single kind, or two or more kinds.

The polyamide resin used for the light-absorptive resin composition is preferably xylylenediamine-based polyamide resin, although the type of which is not specifically limited.

The light-absorptive resin composition may also contain an inorganic filler. The inorganic filler is exemplified by fillers capable of absorbing laser light, such as glass flake (particularly, glass flake having a thickness of 0.1 to 2 µm), glass fiber, carbon fiber, and inorganic powder coated with a laser-absorptive material.

The light-absorptive coloring matter is defined by a coloring matter which is less likely to allow the laser light in laser welding to transmit, as compared with the light-transmissive coloring matter. The light-absorptive coloring matter is exemplified by those that demonstrate maximum absorption within the wavelength range of the laser light to be irradiated, typically from 800 nm to 1100 nm. A mode of the light-absorptive coloring matter of this embodiment relates to a coloring matter that demonstrates a light transmittance at 1060 nm wavelength of smaller than 2%, when measured by the method described later in EXAMPLES, with use of a pellet obtained by blending 0.07 parts by mass of the coloring matter to 100 parts by mass of the polyamide resin (MP10 synthesized in EXAMPLES described later), and melt kneaded in an extruder at a preset temperature of 280°C, with a die temperature set to 110°C.

The light-absorptive coloring matter is specifically exemplified by inorganic pigments [black pigment such as carbon black (acetylene black, lamp black, thermal black, furnace black, channel black, Ketjen black, etc.), red pigment such as red iron oxide, orange pigment such as molybdate orange, and white pigment such as titanium oxide]; and organic pigment (yellow pigment, orange pigment, red pigment, blue pigment, green pigment, etc.). Among them, the inorganic pigment is preferred for its generally high concealability, the black pigment is more preferred, and carbon black is even more preferred.

Two or more kinds of these light-absorptive coloring matters may be combined for use. The content of the light-absorptive coloring matter is preferably 0.01 to 30 parts by mass, per 100 parts by mass of the thermoplastic resin.

In the kit of this embodiment, the component of the transmissive resin composition for laser welding excluding the light-transmissive coloring matter, and the component of the light-absorptive resin composition excluding the light-absorptive coloring matter, are preferably commonalized up to a degree of 80% by mass or more, which is more preferably 90% by mass or more, and even more preferably 95 to 100% by mass.

### <<Laser Welding Method>>

Next, a laser welding method will be explained. In this embodiment, a formed article may be manufactured by laser-welding the formed article formed of the transmissive resin composition for laser welding of this embodiment (transmissive resin member), and the formed article formed of the light-absorptive resin composition (absorptive resin member). Laser welding can tightly weld the transmissive resin member and the absorptive resin member, without using an adhesive.

Shape of the members, although not specifically limited, usually has at least a surface-contact part (flat or curved), since the members are used in a joined form as a result of laser welding. In the laser welding, the laser light transmitted through the transmissive resin member is absorbed by the absorptive resin member, causing melting and welding of both members. Thickness of the member through which the laser light transmits (thickness of a part through which the laser light transmits, measured in the direction of transmission of the laser light) may be suitably determined, considering application, chemical composition of the resin composition and so forth, which is typically 5 mm or smaller, and preferably 4 mm or smaller. The lower limit of the thickness of a part through which the laser light transmits is typically 0.01 mm or above.

A laser light source used for laser welding may be determined depending on absorption wavelength of the light-absorptive coloring matter, wherein the laser light of 800 to 1100 nm wavelength is preferred, and to which semiconductor laser or fiber laser is applicable.

More specifically, in an exemplary case where the transmissive resin member and the absorptive resin member are welded, first, the welding sites of both members are brought into contact. The welding sites herein are preferably kept in surface contact between flat faces, curved faces, or combination of flat and curved faces. Next, the laser light is irradiated through the transmissive resin member. The laser light herein may be optionally condensed through a lens, on the interface between both members. The condensed beam transmits through the transmissive resin member, absorbed at around the surface of the absorptive resin member, generates heat, and melts the resin. The heat is then conducted by thermal conduction also to the transmissive resin member to melt it, to form a molten pool at the interface between both members. Both member are welded after cooled.

The formed article (laser-welded article), composed of the transmissive resin member and the absorptive resin member thus welded, has high weld strength. Note that the formed article in the context of this embodiment encompasses not only finished product or parts, but also members that compose a part of them.

The formed article obtained by laser welding in this embodiment excels in mechanical strength and weld strength, and causes less damage on the resin even after laser irradiation, and is therefore applicable to various purposes, such as a variety of storage containers, electrical/electronic equipment, office automation (OA) equipment, home electric appliances, machine and mechanism parts, and vehicle mechanism parts. In particular, the formed article is suitable for food container, drug container, oil and fat products container, vehicle hollow parts (various tanks, intake manifold part, camera body, etc.), vehicle electrical parts (various control units, ignition coil part, etc.), motor part, various sensor parts, connector part, switch part, circuit breaker part, relay part, coil part, transformer part, lamp part, and so forth. The resin composition and the kit of this embodiment are particularly suitable for vehicle hollow parts such as car-borne camera body.

### EXAMPLES

This invention will further be detailed referring to Examples. All materials, amounts of consumption, ratios, process details and procedures described in Examples below may suitably be modified, without departing from the spirit of this invention. Hence, the scope of this invention is by no means limited to specific Examples below.

In a case where any measuring instrument used in EXAMPLES become unavailable typically due to discontinuation, the measurement may be conducted with use of other instrument having equivalent performances.

### Raw Materials

MP10: Polyamide resin composed of metaxylylenediamine and paraxylylenediamine (MP mole ratio = 7:3) and sebacic acid, synthesized referring to the description in paragraph [0071] of JP 2018-119043 A, with a heat of crystallization measured by the method below of -0.5 mJ/mg.

MP6: Polyamide resin composed of metaxylylenediamine and paraxylylenediamine (mole ratio = 7:3) and adipic acid, synthesized referring to the description in paragraph [0072] of JP 2018-119043 A, with a heat of crystallization measured by the method below of -0.5 mJ/mg.

PA66: Polyamide 66, marketed as Invista U4800 from Invista Nylon Polymer Co., with a heat of crystallization measured by the method below of -0.9 mJ/mg.

The heat of crystallization was measured as described below, with use of a differential scanning calorimeter.

### <Heat of Crystallization>

The synthesized resin was pelletized, formed at a cylinder temperature of 280°C into a test specimen (60 × 60 × 1 mm thick), and subjected to differential scanning calorimetry (DSC) to measure heat of crystallization under heating from 30 to 300°C, at a heating rate of 10°C/min.

The cylinder temperature was set to 260°C for a case where MP10 was used as the polyamide resin, set to 280°C for MP6, and set to 280°C for PA66; meanwhile the die surface temperature was set to 110°C for a case where MP10 was used as the polyamide resin, set to 130°C for MP6, and set to 90°C for PA66.

DSC was conducted with use of DSC7020 from Hitachi High-Tech Science Corporation.

The heat of crystallization was given in mJ/mg.
Talc: #5000S, from Hayashi Kasei Co., Ltd.
Copper(I) iodide: Cu(I)I, from Nihon Kagaku Sangyo Co., Ltd.
Potassium iodide: from FUJIFILM Wako Pure Chemical Corporation
Zinc(II) stearate: from FUJIFILM Wako Pure Chemical Corporation
Mold releasing agent: Calcium montanate CS8CP, from Nitto Chemical Industry Co., Ltd.
Light-transmissive coloring matter: Lumogen (registered trademark) Black K 0088 (former Lumogen Black FK 4281), from BASF Colors & Effects Japan, pigment having a perylene skeleton.

### Inorganic Fillers

Glass fiber: ECS03T-211H, from Nippon Electric Glass Co., Ltd.
Fine flake: Microglass Fine Flake MEG160FY-M06, from Nippon Sheet Glass Co., Ltd., average thickness = *ca*. 0.7 µm, aspect ratio = 3 to 20

### Examples 1 to 6, Comparative Examples 1 to 6

Pellets for forming the light-transmitting member listed in Table 1 or 2 described later (resin compositions) were manufactured.

More specifically, the individual components listed in Table 1 or 2 described later, but excluding the inorganic filler (glass fiber and fine flake), were precisely weighed according to the ratios (in parts by mass) listed in Table 1 or 2, dryblended, and fed from the base of screws of a twin-screw extruder (TEM26SS, from Toshiba Machine Co., Ltd.) by using a twin-screw cassette weighing feeder (CE-W-1-MP, from Kubota Corporation). Meanwhile, the inorganic filler was fed by using a vibrating cassette weighing feeder (CE-V-1B-MP, from Kubota Corporation), from the lateral side of the aforementioned twin-screw extruder, then melt-kneaded with the resin component and so forth, thereby obtaining the pellets (resin composition) for forming the light-transmitting member.

Each of the thus obtained pellets for forming the light-transmitting member was dried at 120°C for 4 hours, and then molded to produce a test specimen for light-transmitting member (60 mm × 60 mm × 1.0 mm thick), by using an injection molding machine (NEX140III-12EG, from Nissei Plastic Industrial Co., Ltd.) .

Each of the pellets thus obtained by the aforementioned manufacturing method was also dried at 120°C for 4 hours, and then molded to produce an ISO tensile test specimen (4 mm thick), by using an injection molding machine (NEX140III-12EG, from Nissei Plastic Industrial Co., Ltd.).

In the molding, the cylinder temperature was set to 260°C for a case where MP10 was used as the polyamide resin, set to 280°C for MP6, and set to 280°C for PA66; meanwhile, the die temperature was set depending on types of the polyamide resin which is a major component of the resin component, such as 130°C (MP6), 110°C (MP10), and 90°C (PA66).

### <Flexural Strength and Flexural Modulus>

With use of the ISO tensile test specimen (4 mm thick), flexural strength (in MPa) and flexural modulus (in MPa) were measured at 23°C, in compliance with ISO 178.

### <Evaluation of Warpage>

Each of the thus obtained test specimen for the light-transmitting member (60 mm × 60 mm × 1.0 mm thick) was placed on a reference stage, the height at the highest point of the specimen (Max height, in mm) and the height at the lowest point of the specimen (Min height, in mm) were individually measured by using a three-dimensional shape profiler, and the difference was determined. More specifically, as illustrated in Fig. 1, height of a reference stage 1 was assumed to be 0 mm, and from among heights of a specimen for the light-transmitting member 2 placed thereon, the height at the highest point 3 and the height at the lowest point (normally at the end of specimen) were measured, and difference between them was determined as warpage 4.

The three-dimensional shape profiler used herein was VR-3200, from Keyence Corporation.

### <Light Transmittance>

Each of the thus obtained test specimens for the light-transmissive member (60 mm × 60 mm × 1.0 mm thick) was subjected to measurement of light transmittance at 1060 nm wavelength. The results were given in %.

The light transmittance was measured with use of LMT-F1LC-PA, from Tsubosaka Electric Co., Ltd.

**[Table 1]**

| Raw material | | Example 1 | Comparative Example 1 | Example 2 | Comparative Example 2 | Example 3 | Comparative Example 3 |
|---|---|---|---|---|---|---|---|
| MP10 | | 68.9 | 68.9 | 48.9 | 48.9 | | |
| MP6 | | | | | | 68.9 | 68.9 |
| PA66 | Invista U4800 | | | | | | |
| Talc | #5000S | 0.3 | 0.3 | 0.3 | 0.3 | 0.3 | 0.3 |
| Copper(I) iodide | CUI | 0.075 | 0.075 | 0.075 | 0.075 | 0.075 | 0.075 |
| Potassium iodide | KI | 0.2 | 0.2 | 0.2 | 0.2 | 0.2 | 0.2 |
| Zinc(II) stearate | [CH₃(CH₂)₁₆COO]₂Zn | 0.025 | 0.025 | 0.025 | 0.025 | 0.025 | 0.025 |
| Mold releasing agent | CS8CP | 0.3 | 0.3 | 0.3 | 0.3 | 0.3 | 0.3 |
| Light-transmissive coloring matter | Lumogen FK4281 (K0088) | 0.2 | 0.2 | 0.2 | 0.2 | 0.2 | 0.2 |
| Inorganic filler | ECS03T-211H | | 30 | | 50 | | 30 |
| | Fine flake | 30 | | 50 | | 30 | |
| Evaluation | Flexural strength (MPa) | 209 | 274 | 270 | 310 | 251 | 313 |
| | Flexural modulus (MPa) | 9227 | 9524 | 15296 | 16100 | 11594 | 11539 |
| | Warpage (Max height - Min height) (mm) | 0.4 | 1.7 | 0.3 | 1.6 | 0.6 | 4.9 |
| | Warpage (Max height) (mm) | 1.7 | 3.2 | 1.6 | 3.2 | 1.6 | 6 |
| | Warpage (Min height) (mm) | 1.3 | 1.5 | 1.3 | 1.6 | 1 | 1.1 |
| | Light transmissivity (%) | 35 | 31 | 48 | 30 | 6 | 3 |

**[Table 2]**

| Raw material | | Example 4 | Comparative Example 4 | Example 5 | Comparative Example 5 | Example 6 | Comparative Example 6 |
|---|---|---|---|---|---|---|---|
| MP10 | | | | | | | |
| MP6 | | 48.9 | 48.9 | | | | |
| PA66 | Invista U4800 | | | 68.9 | 68.9 | 48.9 | 48.9 |
| Talc | #5000S | 0.3 | 0.3 | 0.3 | 0.3 | 0.3 | 0.3 |
| Copper(I) iodide | CUI | 0.075 | 0.075 | 0.075 | 0.075 | 0.075 | 0.075 |
| Potassium iodide | KI | 0.2 | 0.2 | 0.2 | 0.2 | 0.2 | 0.2 |
| Zinc(II) stearate | [CH₃(CH₂)₁₆COO]₂Zn | 0.025 | 0.025 | 0.025 | 0.025 | 0.025 | 0.025 |
| Mold releasing agent | CS8CP | 0.3 | 0.3 | 0.3 | 0.3 | 0.3 | 0.3 |
| Light-transmissive coloring matter | Lumogen FK4281 (K0088) | 0.2 | 0.2 | 0.2 | 0.2 | 0.2 | 0.2 |
| Inorganic filler | ECS03T-211H | | 50 | | 30 | | 50 |
| | Fine flake | 50 | | 30 | | 50 | |
| Evaluation | Flexural strength (MPa) | 319 | 423 | 219 | 295 | 243 | 352 |
| | Flexural modulus (MPa) | 18663 | 19248 | 9200 | 9643 | 14495 | 15709 |
| | Warpage (Max height - Min height) (mm) | 0.5 | 4.4 | 1.6 | 6 | 1.5 | 4.2 |
| | Warpage (Max height) (mm) | 1.7 | 5.8 | 2.6 | 6 | 2.2 | 5.3 |
| | Warpage (Min height) (mm) | 1.2 | 1.4 | 1 | 0 | 0.7 | 1.1 |
| | Light transmissivity (%) | 8 | 3 | 21 | 6 | 9 | 2 |

As is clear from the results above, the formed articles formed of the resin composition of this invention were found to demonstrate high light transmittance (Examples 1 to 6). In contrast, the cases modified from Examples 1 to 6 by using individually equal amounts of glass fiber demonstrated low light transmittance (Comparative Examples 1 to 6). These results teach that use of the glass flake having a thickness of 0.1 to 2 µm thick as the inorganic filler, in place of the glass fiber, successfully improved the light transmittance.

The formed articles formed of the resin composition of this invention were also found to keep various mechanical strengths, and to effectively suppress warpage.

A pellet for forming the absorptive resin member was obtained in the same way as in Example 1, except that the light-transmissive coloring matter was not blended to the resin composition, but instead 3 parts by mass of a carbon black masterbatch (Carbon Black #45, from Mitsubishi Chemical Corporation) was blended as the light-absorptive coloring matter.

The pellet for forming the light-transmissive member obtained in Example 1, and the pellet for forming the absorptive resin member were laser-welded according to the descriptions in paragraph [0072], paragraph [0073], and Fig. 1 of JP 2018-168346 A. Proper laser welding was confirmed.

### REFERENCE SIGNS LIST

- 1: reference stage
- 2: test specimen for light-transmissive member
- 3: highest point
- 4: warpage

## Claims

1. A transmissive resin composition for laser welding containing, per 100 parts by mass of a crystalline thermoplastic resin, 10 to 120 parts by mass of a glass flake having a thickness of 0.1 to 2 um, and a light-transmissive coloring matter.

2. The resin composition of claim 1, wherein the light-transmissive coloring matter has a perylene skeleton.

3. The resin composition of claim 1 or 2, wherein the crystalline thermoplastic resin contains a polyamide resin.

4. The resin composition of claim 3, wherein the polyamide resin contains a polyamide resin that includes a diamine-derived structural unit and a dicarboxylic acid-derived structural unit, in which 70 mol% or more of the diamine-derived structural unit is derived from xylylenediamine, 70 mol% or more of the dicarboxylic acid-derived structural unit is derived from straight-chain aliphatic α,ω-dicarboxylic acid having 4 to 20 carbon atoms, and 30 mol% or more of the xylylenediamine-derived structural unit is a metaxylylenediamine-derived structural unit.

5. The resin composition of any one of claims 1 to 4, demonstrating a warpage of 1 mm or smaller when the resin composition is given in the form of a 60 mm × 60 mm × 1 mm thick formed article, the warpage being a difference of height between the highest point and the lowest point of the formed article placed on a reference stage.

6. The resin composition of any one of claims 1 to 5, wherein the crystalline thermoplastic resin contains a polyamide resin that demonstrates a heat of crystallization, measured with use of a differential scanning calorimeter, of 0 to -1 mJ/mg.

7. A kit comprising the resin composition described in any one of claims 1 to 6, and a light-absorptive resin composition that contains a thermoplastic resin and a light-absorptive coloring matter.

8. A formed article formed of the resin composition described in any one of claims 1 to 6, or formed with use of the kit described in claim 7.

9. A method for manufacturing a formed article, the method comprising laser-welding a formed article formed of the resin composition described in any one of claims 1 to 6, with a formed article formed of a light-absorptive resin composition that contains a thermoplastic resin and a light-absorptive coloring matter.
